# EUROPÄISCHE PATENTSCHRIFT

(11) **EP 2 680 432 B1**
(45) Veröffentlichungstag und Bekanntmachung des Hinweises auf die Patenterteilung: **25.03.2020**
(21) Anmeldenummer: 13173271.1
(22) Anmeldetag: 21.06.2013
(51) Int. Cl.: H02P 8/12

(54) **Verfahren zur Ansteuerung eines Schrittmotors**
Method for controlling a stepper motor
Procédé destiné à la commande d'un moteur pas à pas

(30) Priorität: 29.06.2012 DE 102012105740
(43) Veröffentlichungstag der Anmeldung: 01.01.2014
(73) Patentinhaber: BDT Media Automation GmbH, 78628 Rottweil (DE)
(72) Erfinder: Gundel, Martin, 78549 Spaichingen (DE)
(74) Vertreter: Westphal, Mussgnug & Partner Patentanwälte mbB

(56) Entgegenhaltungen:
- DE-A1- 4 121 617
- DE-A1-102006 021 418
- DE-C1- 19 609 803

## Beschreibung

Die Erfindung betrifft ein Verfahren zur Ansteuerung eines Schrittmotors mit den Merkmalen des Oberbegriffs des Patentanspruchs 1.

Eine beliebte Gattung von Elektromotoren sind Schrittmotoren. Bei einem Schrittmotor wird die Bestromung von Statorspulen durch eine Steuerelektronik so gesteuert, dass ein elektromagnetisches Feld schrittweise rotiert, dem der Rotor nachfolgt.

Motortreiberendstufen, welche auf dem Prinzip der festen Ausschaltzeit zur Strombegrenzung basieren, bei dem die Motortreiberstufe der Steuerelektronik nach Anlegen der Steuersignale den Strom durch die Windungen der jeweils angesteuerten Spule zunächst auf einen eingestellten Sollwert steigert, erlauben es, die durch feste Ausschaltzeiten strombegrenzten Signale auszuwerten. Die Zeit vom Beginn der Bestromung bis zum erstmaligen Erreichen des Strom-Sollwertes wird als "Stromanstiegszeit" bezeichnet. Der Vollständigkeit halber wird an dieser Stelle angemerkt, dass mehrere Spulen, die an unterschiedlichen Stellen des Motors angeordnet sind und gemeinsam angesteuert werden, in dieser Patentschrift als eine Statorspule bezeichnet werden.

Nachdem der Sollwert erreicht ist, wird der von der Steuerelektronik, genauer gesagt deren Motortreiberstufe, bereitgestellte Stromfluss durch die Windungen wiederholt für eine konstante Zeitspanne abgeschaltet und anschließend wieder eingeschaltet, bis der Strom-Sollwert wieder erreicht ist. Während der Stromfluss durch die Windungen abgeschaltet ist, wird der Strom über Freilaufdioden abgeleitet.

Dieses Vorgehen, bei dem somit mehrfach ein Zyklus aus Unterbrechungen des Stromflusses und anschließendem Steigern des Stroms auf den Sollwert durchlaufen wird, wird als "Choppern" bezeichnet. Die Zeit, welche benötigt wird, um den Strom wieder auf den Sollwert steigen zu lassen, nachdem er gemäß der Strombegrenzung aufgrund der festen Ausschaltzeit absank, wird auch als "Chopperimpuls" bezeichnet; m.a.W. unter der Breite eines Chopperimpulses versteht man seine zeitliche Dauer.

Wesentlich für die ordnungsgemäße Funktionsweise eines Schrittmotors ist dabei, dass das elektromagnetische Feld nicht schon zu einem Zeitpunkt durch Bestromung der nächsten Statorspulen weiterrotiert wird, zu dem der Rotor seine letzte Sollposition noch nicht erreicht hatte. Ist dies der Fall, beispielsweise weil der Motor eine unerwartet hohe Last zu bewegen hat, kommt es zumindest zu einem Schrittverlust, wenn nicht gar zur Blockierung des Motors. Es ist jedoch auch von Nachteil, das elektromagnetische Feld erst deutlich nach überschreiten der maximalen Feldüberdeckung weiterzuschalten, da dies einerseits zu Ineffizienz führt und andererseits die Gefahr des Oszillierens birgt.

Aus dem Stand der Technik sind eine Reihe unterschiedlicher Vorgehensweisen zur Motorsteuerung bekannt, um dieses Problem so gut wie möglich zu vermeiden. Die wohl einfachste Art der Ansteuerung ist die Verwendung einer starren Schrittfrequenz mit festgelegten Schrittzeiten. Um bei einer derartigen Ansteuerung eine Blockade zu vermeiden, muss sichergestellt sein, dass der Rotor bei der höchsten denkbaren Last vor dem Initiieren des nächsten Schritts durch die Steuerelektronik seine Zielposition erreicht hat. Gleichzeitig führt dies aber dazu, dass ein mit geringerer Last belasteter Rotor nur mit einer geringeren Schrittfrequenz betrieben werden kann, als es eigentlich möglich wäre, so dass das zur Verfügung stehende Drehmoment nicht optimal genutzt wird, was einen geringen Wirkungsgrad des Antriebs mit sich bringt.

Das Erzielen besserer Wirkungsgrade setzt voraus, dass ein die Ausführung eines Motorschrittes signalisierendes Signal zur Steuerelektronik zurückgekoppelt wird. Eine Möglichkeit dazu besteht darin, einen Encoder vorzusehen, der auf den Schrittwinkel des Motors synchronisiert ist. Dies kann zwar den Wirkungsgrad optimieren, ist aber eine teure Lösung, welche noch zudem zusätzlichen Platzbedarf mit sich bringt.

Eine alternative Möglichkeit, die einschließlich schaltungstechnischer Realisationsmöglichkeiten beispielsweise in der DE 41 21 617 A1 und der DE 196 09 803 C1 offenbart ist, besteht darin, den zeitlichen Verlauf der Ströme während des Chopperbetriebs zu analysieren, um Rückschlüsse darüber zu erhalten, ob ein Schritt durch den Motor ausgeführt wurde: Die Anstiegsgeschwindigkeit des Stroms in den Windungen ist abhängig von der angelegten Spannung, dem Widerstand und der Induktivität der Spule. Die Induktivität einer gegebenen Statorspule ist aber ihrerseits abhängig von der relativen Position von Rotor und Statorspule zueinander, welche dann am höchsten ist, wenn maximale Stator-Rotor-Überdeckung gegeben ist, d.h. wenn Stator und Rotor direkt voreinander positioniert sind. Im Ergebnis wird somit bei der Drehung des Rotors die Induktivität der Statorspule moduliert. Diese Modulation der Induktivität führt dazu, dass, nachdem der Rotor über die Position, in der er der betrachteten Statorspule am nächsten ist, hinweggelaufen ist, die Breite der Chopperimpulse sich spürbar verringert.

Demzufolge kann man, wie detaillierter in der DE 41 21 617 A1 und der DE 196 09 803 C1 offenbart ist, eine Referenz-Pulsbreite für die Chopperimpulse definieren, die Breite der Chopperimpulse überwachen und das erstmalige Unterschreiten der Referenz-Pulsbreite durch die Chopperimpulse als Indikator dafür verwenden, dass die Rotordrehung erfolgt ist und somit der nächsten Schritt durch Bestromung der nächsten Statorspule eingeleitet werden kann. Diese Vorgehensweise ist auch unter dem Begriff "Chopper-Control" bekannt.

In der Praxis zeigt sich jedoch, dass diese Art der Rückkopplung zwar den Wirkungsgrad des Antriebs verbessert, aber noch Raum für Verbesserung lässt. Als problematisch erweist sich nämlich, dass Schrittmotoren, insbesondere Schrittmotoren kompakter Bauart mit hoher Leistungsdichte, wegen des hohen Innenwiderstands der Wicklungen ihrer Statorspulen während des Betriebs heiß werden. Diese Temperaturerhöhung bringt ihrerseits eine Erhöhung des Innenwiderstands mit sich. Konkret erhöht sich der Widerstand der Wicklungen einer Spule aus Kupfer z.B. bei einer Temperaturerhöhung von 60°C um etwa 23%. Der höhere Widerstand der Windungen führt bei konstanter Spannung zu einer Erhöhung der Breite der Chopperimpulse.

Dies bedeutet, dass eine Wahl der Referenz-Pulsbreite, die z.B. für eine Motortemperatur von 20° sicherstellt, dass zur nächsten anzusteuernden Statorspule zu einem nahezu optimalen Zeitpunkt erfolgt, so dass bei dieser Temperatur ein hoher Wirkungsgrad des Antriebs erzielbar ist, bei einer Motortemperatur von 80°C erst bei einem späteren Chopper-Puls unterschritten wird, so dass bei dieser Motortemperatur der Wirkungsgrad des Antriebs deutlich schlechter ist und der Motor mit einer geringeren Schrittfrequenz als eigentlich möglich betrieben wird. Umgekehrt ist aber die Verwendung einer geringeren Referenz-Pulsbreite bei geringerer Motortemperatur, wie sie beispielsweise bei der erstmaligen Inbetriebnahme des Motors nach einer Pause herrschen würde, nicht möglich.

Aus der DE 10 2006 021 418 A1 ist ein Verfahren bekannt, bei dem aus der Überwachung der Stromanstiegszeit im Einschaltmoment und einer Spannungsmessung auf eine mögliche Blockierung eines Motors geschlossen wird.

Aus der US 2012/0014732 A1 ist es bekannt, durch Ermittlung der Stromanstiegszeit im Einschaltzeitpunkt Rückschlüsse auf die aktuelle Motortemperatur zu ziehen, um durch Reduktion des Strom-Sollwertes bei zu hoher Motortemperatur eine Überhitzung des Motors zu vermeiden.

Die Aufgabe der Erfindung besteht daher darin, ein Verfahren zur Ansteuerung eines Schrittmotors bereitzustellen, mit dem der Schrittmotor mit einem höheren Wirkungsgrad, insbesondere mit höherer Schrittfrequenz, betrieben werden kann. Diese Aufgabe wird gelöst durch ein Verfahren mit den Merkmalen des Patentanspruchs 1. Vorteilhafte Weiterbildungen des Verfahrens sind Gegenstand der Unteransprüche.

Gemäß dem erfindungsgemäßen Verfahren zur Ansteuerung eines Schrittmotors werden die Statorspulen des Schrittmotors durch eine Steuerelektronik sequentiell derart bestromt, dass ein rotierendes elektromagnetisches Feld entsteht. Dabei wird bei der Bestromung einer gegebenen Statorspule der Strom durch deren Windungen durch die Steuerelektronik zunächst auf einen definierten Strom-Sollwert gesteigert und danach, nachdem der Sollwert erreicht ist, der Strom gechoppert, indem der von der Steuerelektronik bereitgestellte Stromfluss durch die Windungen wiederholt für eine konstante Zeitspanne abgeschaltet und anschließend ein Chopper-Impuls erfolgt, während dessen der von der Steuerelektronik bereitgestellte Stromfluss wieder eingeschaltet wird, bis der Strom-Sollwert wieder erreicht ist.

Dabei vergleicht, wie allgemein aus Chopper-Control-Verfahren bekannt ist, die Steuerelektronik die Breite jedes Chopper-Impulses, die durch die Zeitdauer definiert ist, die benötigt wird, um nach dem Wiedereinschalten des Stromflusses nach den Strom-Sollwert wieder zu erreichen, mit einer vorgebbaren Referenz-Zeitdauer und beginnt mit der Bestromung der als nächstes zu bestromenden Statorspule, sobald die Breite des Chopper-Impulses erstmals die Referenz-Zeitdauer unterschreitet.

Erfindungswesentlich ist, dass die Referenz-Zeitdauer während der Ansteuerung des Schrittmotors an die aktuellen Arbeitsbedingungen des Schrittmotors angepasst wird. Durch diese Maßnahme wird bewirkt, dass der Schrittmotor stets nahe an seinem optimalen Arbeitspunkt betrieben wird, so dass ein verbesserter Wirkungsgrad erzielt wird.

Gemäß einer besonders vorteilhaften Ausgestaltung der Erfindung basiert die Anpassung der Referenz-Zeitdauer während der Ansteuerung des Schrittmotors an die Arbeitsbedingungen des Schrittmotors auf einer Messung der Referenzpulsbreite über mehrere Zyklen von Stromanstiegszeiten im Chopperbetrieb bei ruhendem bestromten Schrittmotor, der sogenannten Vorbestromungsphase. Die Vorbestromungsphase hat den Hintergrund, den Motor in einen definierten Ausgangszustand hinsichtlich der Stator-Rotor-Überdeckung zu versetzen, da im nicht bestromten Zustand die Möglichkeit besteht, dass sich der rotor zwischen zwei Polen befindet. Dies wiederum könnte zu einem ungünstigen Anlaufverhalten führen, weshalb vor dem Anlauf die Motorwicklungen entsprechend vorbestromt werden. Das hier vorgeschlagene Verfahren hat gegenüber dem in US20120014732A1 beschrieben Verfahren, bei welchem lediglich während eines Zyklus der Stromanstiegszeit zwischen dem ersten Einprägen des Stroms bis zum ersten Maximum ausgewertet wird, den Vorteil, dass bei der Bewegung auftretende Störeffekte zuverlässig vermieden werden und dass durch Messung mehrerer dieser Zeitintervalle ein Messwert mit kleinerem statistischen Messfehler erhalten wird.

Als besonders geeignete Art, die Messungen der aktuellen Breite der Chopper-Impulse bei ruhendem bestromten Schrittmotor zur Anpassung der Referenz-Zeitdauer während der Ansteuerung des Schrittmotors zu verwenden, hat sich erwiesen, die gemessene Breite der Chopper-Impulse bei ruhendem bestromten Schrittmotor über eine Look-Up-Tabelle mit einer entsprechenden Breite der Chopper-Impulse bei drehendem bestromten Schrittmotor zu korrelieren und den in der Look-Up-Tabelle enthaltenen, korrelierten Wert als aktuelle Referenz-Zeitdauer zu verwenden.

In einer besonders vorteilhaften Weiterbildung dieser Ausgestaltung wird die Look-Up-Tabelle erstellt, indem für ein Exemplar eines gegebenen Schrittmotortyps jeweils die Breite der Chopper-Impulse bei ruhendem bestromten Schrittmotor und die entsprechende Breite der Chopper-Impulse bei drehendem bestromten Schrittmotor für unterschiedliche Kombinationen aus Widerstand (entsprechend einer Temperaturänderung), Induktivität, Spannung und Strom ermittelt wird und in der Look-Up-Tabelle hinterlegt wird. Dabei stehen für jeweils eine Kombination die Werte für Widerstand, Induktivität, Spannung und Strom in physikalisch möglicher Beziehung. Da sowohl Widerstand und Induktivität, durch ihre spezifischen Eigenschaften, wie bspw. Temperaturabhängigkeit, als auch die Spannung, bspw. durch die instabile Quelle, Änderungen bzgl. des Stroms und der Stromanstiegszeit hervorrufen können, es aber für die Betrachtung der Anstiegszeit unerheblich ist, welcher Parameter die Änderung hervorruft, ist es sinnvoll aus einem ermittelten Zeitwert in der Vorbestromungsphase auf einen Zeitwert für den kommutierten / drehenden bestromten Schrittmotor zu schließen. Die Verwendung derartig ermittelter Tabellen bietet die Möglichkeit sowohl statischen Widerstandsänderungen, welche bspw. durch Toleranzen von Fertigungschargen, unterschiedlichen Leitungslängen oder allgemein unterschiedlicher Anschlusskabel und Kontaktierungen hervorgerufen werden können, als auch dynamischen Widerstandsänderungen bspw. durch Temperaturänderung hervorgerufen, zu kompensieren.

Ergänzend wird darauf hingewiesen, dass mit Hilfe einer solchen Tabelle auch eine Temperaturmessung der Betriebstemperatur des Motors möglich ist, da Strom und Spannung einfach gemessen werden können, daraus der aktuelle Spulenwiderstand berechnet werden kann und dann die Motortemperatur aus der bekannten Temperaturabhängigkeit des Spulenwiderstands ermittelbar ist.

Es hat sich als besonders vorteilhaft erwiesen, wenn die Messung der aktuellen Breite der Chopper-Impulse im eingeschwungenen Zustand des Schrittmotors erfolgt, also dann, wenn mindestens ein Rotor- und Statorpol optimal zueinander stehen, sich also überdecken, da in diesem Zustand sicher gestellt ist, dass der störende Einfluss einer undefinierten Rotorposition vermieden wird, welcher aus einer induzierten Gegenspannung aufgrund der elektromotorischen Kraft (EMK) des Motors herbeigeführt würde.

Besonders bevorzugt ist es, wenn die Messung der Breite der Chopper-Impulse bei ruhendem bestromten Schrittmotor in einer Vorbestromungsphase erfolgt, da dadurch ein zusätzlicher Zeitbedarf zu einem Zeitpunkt, zu dem die Drehung des Motors erfolgen soll, konsequent vermieden wird.

Die Erfindung wird nachfolgend an Hand von Figuren näher erläutert. Es zeigen:
- Fig. 1:: Einen gemessenen zeitlichen Verlauf des Phasenstroms in einer Statorspule bei drehendem Schrittmotor;
- Fig. 2:: einen gemessenen zeitlichen Verlauf des Phasenstroms in einer Statorspule bei stehendem Schrittmotor und maximaler Rotor-Stator-Überdeckung;
- Fig. 3:: einen gemessenen zeitlichen Verlauf des Phasenstroms in einer Statorspule bei stehendem Schrittmotor, wenn vor dem Einprägen des Stroms keine maximale Rotor-Stator-Überdeckung gegeben ist; und
- Fig. 4:: einen vergrößerten Ausschnitt des Signals aus Figur 1 während des Chopperns und das zugehörige Choppersignal.

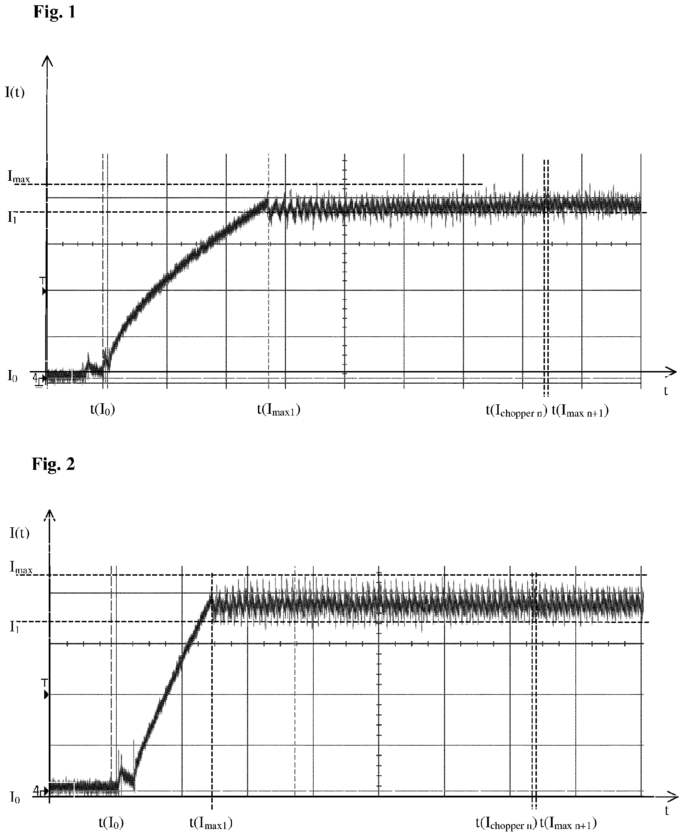

Fig. 1 zeigt in Abhängigkeit von der Zeit t einen gemessenen Verlauf des Phasenstroms I(t) in einer Statorspule bei drehendem Schrittmotor. Zum Zeitpunkt t(I₀) werden die Steuersignale der Steuerelektronik gesetzt. Die Bestromung der Statorspule beginnt und wird so lange fortgesetzt, bis die vorgegebene maximale Stromstärke Iₘₐₓ zum Zeitpunkt t(Iₘₐₓ₁) erreicht ist. Dabei folgt der Phasenstrom wegen der Induktivität der Wicklungen der Statorspule nicht instantan nach, sondern steigt langsam an. Dies ist die Zeitdauer, die gemäß der Lehre der DE 10 2006 021418 A1 bzw. der US 2012/0014732 A1 analysiert wird.

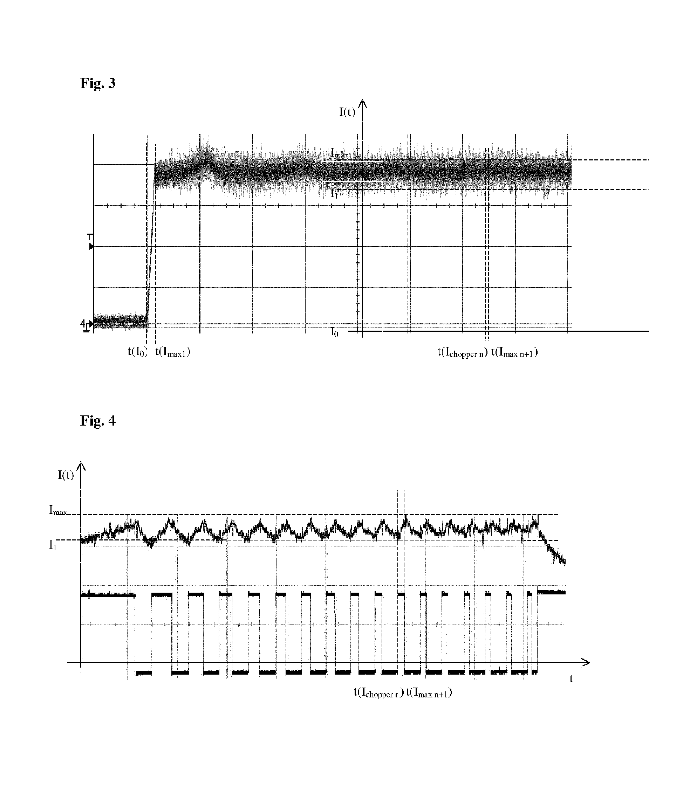

Anschließend wird die Stromzufuhr gechoppert betrieben, wie besonders gut in der vergrößerten Darstellung der Figur 4 zu erkennen ist. Die untere der beiden in Figur 4 dargestellten Kurven repräsentiert das Choppersignal, das in Abhängigkeit von der Zeit zwischen den Zuständen "high", entsprechend eingeschaltetem Stromfluss der Steuerelektronik und "low", entsprechend ausgeschaltetem Stromfluss der Steuerelektronik hin- und hergeschaltet wird. Wie an dieser Kurve zu erkennen ist, wird immer dann, wenn Iₘₐₓ erreicht ist, das Choppersignal für eine feste Zeitspanne in den Zustand "low" überführt. Während dieser Zeitspanne sinkt der Phasenstrom I(t) ab, wobei das Ausmaß des Absinkens von der Induktivität der Statorspule abhängt und, da sich nach Anlegen der Steuersignale an die betrachtete Statorspule der Rotor auf diese zu bewegt, mit der Zeit immer geringer wird.

Als Konsequenz werden die Zeiträume, in denen das Choppersignal im Zustand "high" ist, immer kürzer, bis schließlich die Referenz-Zeitdauer unterschritten und die Bestromung der nächsten Statorspule aktiviert wird.

In Figur 1 und 4 ist ferner jeweils die Zeitdauer, deren Analyse zur erfindungsgemäßen Aktualisierung der Referenz-Zeitdauer verwendet wird, exemplarisch durch die Startzeit t(I_{chopper n}) und die Endzeit t(I_{max n+1)} markiert.

Wie man der Darstellung des gemessenen zeitlichen Verlauf des Phasenstroms in einer Statorspule bei stehendem Schrittmotor und maximaler Rotor-Stator-Überdeckung gemäß Figur 2 entnimmt, ist in dieser Situation die Breite der Chopperpulse im Wesentlichen konstant, da sich die Induktivität der Statorspule nicht mehr ändert. Dies gilt allerdings nur so lange, wie die Arbeitsbedingungen und insbesondere die Temperatur der Windungen der Statorspule konstant bleibt; ändern sich diese, ändert sich der Widerstand der Statorspule und somit auch der Stromfluss. Ferner erkennt man im Vergleich zur Situation bei drehendem Motor, die in Figur 1 dargestellt ist, dass insgesamt die Anstiegszeiten, bis der Strom Iₘₐₓ erreicht ist, jeweils kürzer sind.

Grundsätzlich ist es daher möglich, die Breite der Chopperpulse auch im Ruhezustand des Schrittmotors, beispielsweise während einer Vorbestromungsphases, zu ermitteln, wodurch auch eine wiederholte Messung und Mittelung der Ergebnisse ermöglicht wird. Allerdings muss in diesem Fall die Korrelation zwischen den Breiten der Chopperpulse bei ruhendem und drehendem Schrittmotor bei gegebenen Randbedingungen wie Widerstand (entsprechend der Temperatur), Induktivität, Spannung und Stromstärke gefunden und tabelliert werden.

Anhand der Figur 3, welche einen gemessenen zeitlichen Verlauf des Phasenstroms in einer Statorspule bei stehendem Schrittmotor, wenn vor dem Einprägen des Stroms keine maximale Rotor-Stator-Überdeckung gegeben ist, in anderem Zeitmaßstab zeigt, wird deutlich, warum es vorteilhaft ist, die Messung in eingeschwungenem Zustand des Schrittmotors auszuführen. Im Bereich links von der Ordinatenachse erkennt man einen den durch das Choppern hervorgerufenen, Änderungen des Stroms überlagernden, welligen Verlauf der Einhüllenden der Kurve I(t), der durch das Einschwingverhalten des Rotors und dabei auftretende EMK bedingt wird. Dementsprechend sind Messungen in diesem Zustand mit einem höheren Fehler behaftet und weniger zuverlässig.

## Patentansprüche

1. Verfahren zur Ansteuerung eines Schrittmotors, bei dem Statorspulen des Schrittmotors durch eine Steuerelektronik sequentiell derart bestromt werden, dass ein rotierendes elektromagnetisches Feld entsteht,
wobei bei der Bestromung einer gegebenen Statorspule der Strom (I) durch deren Windungen durch die Steuerelektronik zunächst auf einen definierten Strom-Sollwert (Iₘₐₓ) gesteigert wird und, nachdem der Strom-Sollwert (Iₘₐₓ) erreicht ist, der Strom (I) gechoppert wird, indem der von der Steuerlektronik bereitgestellte Stromfluss durch die Windungen wiederholt für eine konstante Zeitspanne abgeschaltet und anschließend ein Chopper-Impuls erfolgt, während dessen der von der Steuerlektronik bereitgestellte Stromfluss wieder eingeschaltet wird, bis der Strom-Sollwert (Iₘₐₓ) wieder erreicht ist,
wobei die Steuerelektronik die durch die Zeitdauer, die benötigt wird, um nach dem Wiedereinschalten des Stromflusses den Strom-Sollwert wieder zu erreichen, definierte Breite jedes Chopper-Impulses mit einer vorgebbaren Referenz-Zeitdauer vergleicht und mit der Bestromung der als nächstes zu bestromenden Statorspule beginnt, sobald die Breite des Chopper-Impulses erstmals die Referenz-Zeitdauer unterschreitet,
**dadurch gekennzeichnet, dass** die Referenz-Zeitdauer während der Ansteuerung des Schrittmotors an die Arbeitsbedingungen wie Widerstand, Induktivität, Spannung und Stromstärke des Schrittmotors angepasst wird.

2. Verfahren nach Anspruch 1,
**dadurch gekennzeichnet, dass** die Anpassung der Referenz-Zeitdauer während der Ansteuerung des Schrittmotors an die Arbeitsbedingungen des Schrittmotors auf einer Messung der aktuellen Breite der Chopper-Impulse basiert.

3. Verfahren nach Anspruch 2,
**dadurch gekennzeichnet, dass** die Messung der aktuellen Referenzpulsbreite der Chopperpulse bei ruhendem Schrittmotor erfolgt.

4. Verfahren nach Anspruch 3,
**dadurch gekennzeichnet, dass** zur Anpassung der Referenz-Zeitdauer während der Ansteuerung des Schrittmotors die gemessene Breite der Chopper-Impulse bei ruhendem bestromten Schrittmotor über eine Look-Up-Tabelle mit einer entsprechenden Breite der Chopper-Impulse bei drehendem bestromten Schrittmotor korreliert wird und dass der in der Look-Up-Tabelle enthaltene, korrelierte Wert als aktuelle Referenz-Zeitdauer verwendet wird.

5. Verfahren nach Anspruch 4,
**dadurch gekennzeichnet, dass** die Look-Up-Tabelle erstellt wird, indem für ein Exemplar eines gegebenen Schrittmotortyps jeweils die Breite der Chopper-Impulse bei ruhendem bestromten Schrittmotor und die entsprechende Breite der Chopper-Impulse bei drehendem bestromten Schrittmotor für unterschiedliche Kombinationen aus Widerstand, Induktivität, Spannung und Strom ermittelt und in der Look-Up-Tabelle hinterlegt werden.

6. Verfahren nach einem der Ansprüche 2 bis 5,
**dadurch gekennzeichnet, dass** die Messung der aktuellen Breite der Chopper-Impulse im eingeschwungenen Zustand des Schrittmotors erfolgt.

7. Verfahren nach Anspruch 6,
**dadurch gekennzeichnet, dass** die Messung der Breite der Chopper-Impulse bei ruhendem bestromten Schrittmotor in einer Vorbestromungsphase erfolgt.

## Claims

1. Method for controlling a stepper motor, wherein stator coils of the stepper motor are sequentially energized by an electronic control system, resulting in the generation of a rotating electromagnetic field and wherein, when one of the given stator coils is energized, the current (I) through its turns is first increased to a defined current set point (Iₘₐₓ) by the electronic control system and, after the current set point (Iₘₐₓ) has been reached, the current (I) is chopped by repeatedly switching off, for a constant period of time, the flow of current through the turns that is provided by the electronic control system, after which a chopper impulse follows, during which the flow of current provided by the electronic control system is again switched on until the current set point (Iₘₐₓ) has again been reached, wherein the electronic control system compares the width of every chopper impulse, which is defined by the time duration needed to again reach the current set point after the flow of current has again been switched on, with a specifiable reference time duration and the energizing of the following stator coil to be energized is begun as soon as the width of the chopper impulse falls below the reference time duration for the first time, the method being **characterized in that**, while the stepper motor is being controlled, the reference time duration is adapted to working conditions of the stepper motor such as the resistance, inductivity, frequency and current strength.

2. Method in accordance with claim 1,
**characterized in that** the adaptation of the reference time duration to the working conditions of the stepper motor while the stepper motor is being controlled is based on a measurement of the present width of the chopper impulse.

3. Method in accordance with claim 2,
**characterized in that** the measurement of the present reference impulse width of the chopper impulse takes place while the stepper motor is idle.

4. Method in accordance with claim3,
**characterized in that**, to adapt the reference time duration while controlling the stepper motor, the measured width of the chopper impulse in an idle, energized stepper motor is correlated with a corresponding width of the chopper impulse in a rotating, energized stepper motor over a lookup table and **in that** the correlated value contained in the lookup table is used as the present reference time duration.

5. Method in accordance with claim 4,
**characterized in that** the lookup table is compiled by determining the respective width of the chopper impulse for a given specimen of a stepper motor type in an idle, energized stepper motor and the corresponding width of the chopper impulse in a rotating, energized stepper motor for various combinations of resistance, inductivity, voltage and current strength and recording them in the lookup table.

6. Method in accordance with any of claims 2 to 5,
**characterized in that** the present width of the chopper impulse is measured when the stepper motor is in a steady state.

7. Method in accordance with claim 6,
**characterized in that** the width of the chopper impulse in the idle, energized stepper motor is measured during a pre-energizing phase.

## Revendications

1. Procédé de commande d'un moteur pas à pas dont les bobines de stator sont séquentiellement alimentées en courant par une électronique de commande de façon à créer un champ électromagnétique rotatif, selon lequel
lors de l'alimentation en courant d'une bobine de stator donnée le courant (I) passant au travers de ses enroulements est tout d'abord augmenté par l'électronique de commande, à une valeur de consigne du courant (Iₘₐₓ) défini, après que la valeur de consigne du courant (Iₘₐₓ) ait été atteinte, le courant (I) est haché en coupant de manière répétitive le flux de courant au travers des enroulements fourni par l'électronique de commande pendant une durée constante, puis est délivrée une impulsion de hachage, pendant laquelle le flux de courant fourni par l'électronique de commande est à nouveau branché jusqu'à ce que la valeur de seuil (Iₘₐₓ) du courant ait à nouveau été atteinte, l'électronique de commande compare la largeur de chaque impulsion de hachage définie par la durée qui est nécessaire pour atteindre à nouveau la valeur de consigne du courant après le rebranchement du flux de courant avec une durée de référence prédéfinie, et commence l'alimentation en courant de la bobine de stator devant être ensuite alimentée en courant suivante dès que la largeur de l'impulsion de hachage passe pour la première fois au-dessous la durée de référence,
**caractérisé en ce que**
pendant la commande du moteur pas à pas la durée de référence est adaptée à des conditions de travail telles que la résistance, l'inductance, la tension et l'intensité du courant du moteur pas à pas.

2. Procédé conforme à la revendication 1,
**caractérisé en ce que**
l'adaptation de la durée de référence pendant la commande du moteur pas à pas aux conditions de travail de ce moteur pas à pas est basée sur une mesure de la largeur actuelle des impulsions de hachage.

3. Procédé conforme à la revendication 2,
**caractérisé en ce que**
la mesure de la largeur de référence actuelle des impulsions de hachage est effectuée alors que le moteur pas à pas est au repos.

4. Procédé conforme à la revendication 3,
**caractérisé en ce que**
pour adapter la durée de référence pendant la commande du moteur pas à pas la largeur des impulsions de référence mesurée lorsque le moteur pas à pas alimenté en courant est au repos est mise en corrélation par l'intermédiaire d'une table de consultation avec une largeur correspondante des impulsions de hachage lorsque le moteur pas à pas, alimenté en courant tourne, et la valeur de corrélation extraite de la table de consultation est utilisée en tant que durée de référence actuelle.

5. Procédé conforme à la revendication 4,
**caractérisé en ce que**
la table de consultation est établie en déterminant respectivement pour un exemplaire d'un type de moteur pas à pas déterminé, la largeur des impulsions de hachage lorsque le moteur pas à pas, alimenté en courant est au repos et la largeur correspondante des impulsions de hachage lorsque le moteur pas à pas, alimenté en courant tourne, pour différentes combinaisons de résistance, d'inductance, de tension et de courant et en les enregistrant dans la table de consultation.

6. Procédé conforme à l'une des revendications 2 à 5,
**caractérisé en ce que**
la mesure de la largeur actuelle des impulsions de hachage est effectuée dans un état transitoire du moteur pas à pas.

7. Procédé conforme à la revendication 6,
**caractérisé en ce que**
la mesure de la largeur des impulsions de hachage est effectuée lorsque le moteur pas à pas alimenté en courant est au repos dans une phase d'alimentation en courant préalable.
